# EUROPÄISCHE PATENTSCHRIFT

(11) **EP 1 408 008 B1**
(45) Veröffentlichungstag und Bekanntmachung des Hinweises auf die Patenterteilung: **03.08.2005**
(21) Anmeldenummer: 02022686.6
(22) Anmeldetag: 10.10.2002
(51) Int. Cl.: C02F 3/28

(54) **Reaktor mit Dreiphasen-Trennvorrichtung und Verfahren zur Trennung eines Dreiphasengemisches**
Reactor with a three-phase separating device and method for separating a three-phase mixture
Réacteur avec un dispositif de séparation à trois phases et procédé de séparation à trois phases

(43) Veröffentlichungstag der Anmeldung: 14.04.2004
(73) Patentinhaber: VA TECH WABAG GmbH, 1211 Wien (AT)
(72) Erfinder: Datschewski, Peter, 42489 Wülfrath (DE); Klegraf, Ferdinand, 65345 Rauenthal (DE); Risse, Henry, 52068 Aachen (DE); Tippmann, Kurt, 35428 Langgöns (DE)
(74) Vertreter: VA TECH Patente GmbH & Co

(56) Entgegenhaltungen:
- EP-A- 0 808 805
- EP-B- 0 142 123
- FR-A- 2 416 200
- US-A- 4 618 418

## Beschreibung

Die Erfindung betrifft einen Reaktor zur anaeroben Behandlung von Flüssigkeiten, inbesondere von Abwasser oder wässrigen Prozesslösungen, durch anaerobe biologische Umsetzung organischer Verunreinigungen mittels granulierter, flockiger oder auf leicht fluidisierbaren Trägermaterialien fixierter Biomasse, mit einer Dreiphasen-Trennvorrichtung zur Trennung von Gas, Flüssigkeit und Feststoff, und ein Verfahren zur zur anaeroben Behandlung von Flüssigkeiten.

Die anaerobe Reinigung organisch belasteter Abwässer wird vorteilhaft in Schlammbettreaktoren betrieben, die nach dem UASB-Prinzip arbeiten. Reaktoren, die nach diesem Prinzip arbeiten, werden z.B. in der EP 0 244 029 B1 und EP 0 808 805 A1 beschrieben. Auch die hier beschriebene Erfindung nutzt das UASB-Prinzip.

Der Vorgang der Reinigung läuft in einem Dreiphasensystem ab, bestehend aus der Flüssigkeit, welche das zu behandelnde Abwasser darstellt, aus dem Feststoff - der im Schlammbett vorliegenden flockigen oder granulierten Biomasse oder dem leicht fluidisierbaren Biomasseträger - sowie der Gasphase, die vorwiegend aus Methan CH₄, Kohlendioxid CO₂ und Spurengasen besteht.

Die Biomasse eines UASB-Reaktors liegt idealerweise in Form eines Gemisches (Schlamm) vor, dass sich aus kugelförmigen Agglomeraten (Schlammpellets) und Feinschlamm zusammensetzt, wobei die Schlammpellets idealer Weise Durchmesser von unter 1 bis 5 mm und eine höhere Dichte als Wasser aufweisen, wodurch sich ein Schlammbett ausbildet. Die Biomasse kann aber auch auf Trägermedien aufgebracht werden, sodass sich die folgenden Ausführungen zu Schlamm bzw. Schlammpellets auch auf diese mit Biomasse bewachsenen Trägermedien beziehen.

Im Schlammbett erfolgt ein Großteil der Umsetzung des organischen Materials. Durch die im Schlammbett erfolgende Biogaserzeugung kommt es zu einer Blasenbildung. Die aufsteigenden Blasen und der aufwärts gerichtete Flüssigkeitsstrom fluidisieren das Schlammbett.

UASB-Reaktoren enthalten Dreiphasen-Trennvorrichtungen, mit denen die drei Phasen Biogas, gereinigtes Abwasser und Biomasse voneinander getrennt werden. Diese Dreiphasen-Trennvorrichtungen sind in der Regel über dem Schlammbett angeordnet, enthalten eine oder mehrere Hauben zum Auffangen und Fortleiten des Biogases sowie an der Wasseroberfläche Ablaufrinnen für die Fortleitung des gereinigten Abwassers. Diese Konstruktionen erlauben nach Gasabtrennung die Sedimentation der Biomasse.

Der auf diese Weise konstruierte UASB-Reaktor ist großvolumig und erlaubt nur geringe Umsatzraten.

Aus der US 4,618,418 A ist ein Reaktor mit einer Dreiphasen-Trennvorrichtung zur Trennung von Gas, Flüssigkeit und Feststoff bekannt, welche einen Sedimentationsbehälter aufweist, der eine Schlammleitung für sedimentierte Feststoffe aufweist, mit welcher der Sedimentationsbehälter an seiner Unterseite gegenüber der Umgebung abgeschlossen ist.

Eine Aufgabe der Erfindung ist es nun, den Reaktoraufbau so zu modifizieren, dass sehr hohe volumenspezifische Umsatzraten und damit eine effizientere Ausnutzung des Reaktorvolumens erzielt werden können. Eine besondere Aufgabe ist es hierbei, die Dreiphasen-Trennvorrichtung des Reaktors so zu verändern, dass auch bei hohen volumenspezifischen Umsatzraten eine ausreichende Trennung von Biogas und Schlammpellets erfolgt.

Diese Aufgaben werden erfindungsgemäß durch einen Reaktor nach Anspruch 1 oder ein Verfahren nach Anspruch 10 gelöst. Die Ansprüche 2 bis 9 betreffen bevorzugte Ausführungen der Erfindung.

Durch die Einströmkanten erfolgt eine Umlenkung und Strömungsbeschleunigung des Dreiphasengemisches, sodass das Gas von den Schlammpellets abgetrennt wird. Das verbleibende Gemisch gelangt in den Sedimentationsbehälter, wo sich eine Einrichtung zur Unterstützung der Feststoffseparation befindet, die Lamellen aufweist und welche die Trennung von Biogas und Schlampellets sicherstellt.

Eine solche Einrichtung ist etwa auch eine Abgrenzung (die z.B. durch eine perforierte Wand gebildet wird, die einfach herzustellen ist), welche den Sedimentationsbehälter in einen Raum zur Strömungsberuhigung und einen Sedimentationsraum unterteilt. Das nach der Umlenkung an den Einströmkanten verbleibende Gemisch gelangt in den Raum zur Strömungsberuhigung und weiter in den Sedimentationsraum, wobei die Abgrenzung unter anderem bewirkt, dass die Strömung des verbleibenden Gemisches gleich verteilt wird. Im Sedimentationsraum sinken die Feststoffe, also die Schlammpellets, nach unten, sodass Biomasseverluste durch effektive Abscheidung vermieden werden.

Zusätzlich sind im Sedimentationsbehälter oder gegebenenfalls im Sedimentationsraum die Einrichtungen zur Unterstützung der Feststoffseparation angeordnet, welche Lamellen oder andere Separationseinrichtungen aufweisen, die ebenfalls dafür sorgen, dass die Feststoffe nach unten sinken.

Eine Einrichtung zum Ableiten der gereinigten Flüssigkeit ist zweckmäßigerweise im Sedimentationsbehälter, insbesondere im Sedimentationsraum, angeordnet.

Dadurch, dass der Sedimentationsbehälter an seiner Unterseite gegenüber dem Reaktorinnenraum abgeschlossen ist, kann sich außerhalb entlang des Sedimentationsbehälters eine ungestörte Aufwärtsströmung ausbilden.

Ein sich erweiternder Querschnitt des Sedimentationsbehälters bewirkt, dass sich das Gas im Reaktorraum unterhalb des Sedimentationsbehälters sammeln kann, sich die Aufströmgeschwindigkeit des Dreiphasengemisches entlang der Außenwand des Sedimentationsbehälters vergrößert und sich damit die Wirkung der Gasabscheidung beim Einströmen des Dreiphasengemisches über die Einströmkante in den Sedimentationsbehälter erhöht.

Das Rückführen des sedimentierten Schlammes in eine lokale Abwärtsströmung am Reaktorkopf hat den Vorteil, dass die Schlammpellets ungestört und rasch zurück nach unten in das Schlammbett sinken.

Durch einen im Schlammbett des Reaktors angeordneten Gasabscheider wird ein Teil des Biogases schon im Schlammbett aus dem System entnommen, wodurch zu hohe Gasleerrohrgeschwindigkeiten vermieden werden.

Die Gasabscheiderelemente des Gasabscheiders können verschiedene Formen haben sowie horizontal oder leicht versetzt angeordnet sein, sodass ein Großteil des im Reaktor gebildeten Biogases durch diesen Gasabscheider aufgefangen werden kann. Der Gasabscheider ist in der unteren Hälfte des Reaktors angeordnet. Das restliche Gas durchströmt den Bereich über dem Schlammbett und entweicht an der Oberfläche in den Gassammelraum des Reaktors.

Das erzeugte Biogas kann durch Ausnützung des Mammutpumpeneffektes direkt - oder indirekt mittels einer Pumpe - zur Förderung des sedimentierten Schlammes in den Reaktorkopf verwendet werden.

Nachfolgend wird die Erfindung anhand der als Beispiele angeführten schematischen Fig. 1-3 näher erläutert. Es zeigen:
Fig. 1: einen Längsschnitt des erfindungsgemäßen Reaktors
Fig. 2: einen Querschnitt des erfindungsgemäßen Reaktors in Höhe des Gasabscheiders
Fig. 3: einen Querschnitt des erfindungsgemäßen Reaktors in Höhe der Dreiphasen-Trennvorrichtung.

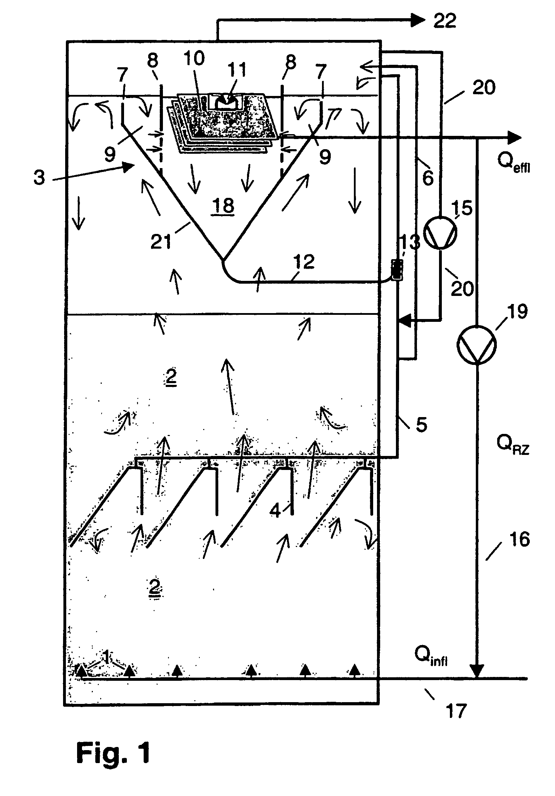

Der Reaktor gemäß Fig. 1 weist im Reaktionsraum 2 einen Gasabscheider mit Gasabscheiderelementen 4 sowie eine Dreiphasen-Trennvorrichtung 3 am Reaktorkopf bzw. oberhalb des Schlammbettes, das sich unten im Reaktionsraum 2 (grau dargestellt) befindet, auf. Die bevorzugte Strömungsrichtung des Dreiphasengemisches bzw. der Flüssigkeit ist mit Pfeilen dargestellt.

Das zu behandelnde Abwasser wird über eine Zuführrohrleitung 17 und ein im Bodenbereich befindliches Abwasserverteilsystem mit Einspeisestellen 1 in das Schlammbett eingespeist. In der unteren Hälfte des Reaktors befindet sich eine Ebene mit Gasabscheiderelementen 4, die das Auffangen des gebildeten Biogases ermöglichen und es über eine Verbindungsleitung 5 aus dem Reaktor heraus ableiten. Das in der Verbindungsleitung 5 erfasste Gas kann als Antriebsgas für die Mammutpumpe 13 zur Schlammrückführung in der Schlammleitung 12 genutzt werden, es kann aber auch, je nach Bedarf der Mammutpumpe, über die Steigleitung 6 in den Gassammelraum im Kopf des Reaktors geleitet werden. Im Reaktorkopf gesammeltes Biogas 22 kann von dort abgezogen werden.

Über dem Schlammbett nahe der Wasseroberfläche befindet sich die Dreiphasen-Trennvorrichtung 3, dessen trichterförmiger Sedimentationsbehälter 21 nach unten zum Reaktionsraum 2 hin vollständig geschlossen ist. Das zu trennende Dreiphasengemisch strömt über zwei Einströmkanten 7 in die Dreiphasen-Trennvorrichtung 3. An diesen Einströmkanten 7 erfolgt die Strömungsbeschleunigung, welche die wirksame Abtrennung der Gasbläschen von den mitgerissenen Schlammpellets ermöglicht. Nach Passieren der Einströmkante 7 erfolgt die Strömungsberuhigung in dem dafür vorgesehenen Raum 9. Über Öffnungen in der Wand 8 erfolgt eine Verteilung der Strömung. Das Abwasser strömt durch die Wände 8 dem Sedimentationsraum 18 zu. In diesem kann zur Unterstützung der Sedimentationswirkung vorzugsweise ein Lamellenpaket 10 oder eine andere Separationseinrichtung montiert werden, das von dem zu trennenden AbwasserSchlamm-Gemisch überwiegend horizontal durchflossen wird.

Das gereinigte Abwasser wird über mindestens eine Ablaufrinne 11 abgezogen. Der separierte Schlamm, insbesondere die Schlammpellets, rutscht im Sedimentationsraum 18 nach unten in den Schlammtrichter, von dessen Spitze eine Schlammleitung 12 aus dem Reaktor hinausführt.

Diese Schlammleitung 12 mündet außerhalb des Reaktors in eine Mammutpumpe 13, die den Rücktransport der Schlammpellets aus dem Schlammtrichter über die externe Schlammleitung 12 in den Reaktorraum bewirkt. Die rückgeführten Schlammpellets werden oberhalb der Wasseroberfläche in einen Bereich mit abwärts gerichteter Strömung eingespeist.

Die Mammutpumpe 13 wird vom Biogas angetrieben, welches in der unteren Ebene der Gasabscheiderelemente 4 aufgefangen oder durch ein externes Biogasgebläse 15 über Leitung 20 in die Mammutpumpe 13 eingespeist wird. D.h. durch die Gaseinspeisung entsteht ein Mammutpumpeneffekt, durch welchen der in der Spitze des Schlammtrichters 18 akkumulierte Schlamm in den oberen Teil des Reaktors über die Wasserfläche gehoben wird. Die Schlammförderung des Rücklaufs kann geregelt ausgeführt werden.

Mit der lokalen Abwärtsströmung wird der Schlamm in den Reaktionsraum 2, also in das Schlammbett, zurückgefördert.

Zur Einstellung definierter Zulaufkonzentrationen ist ggf. eine Rezirkulation vom Ablauf des Reaktors über eine Pumpe 19 und eine Rezirkulationsleitung 16 in die Zuführrohrleitung 17 erforderlich.

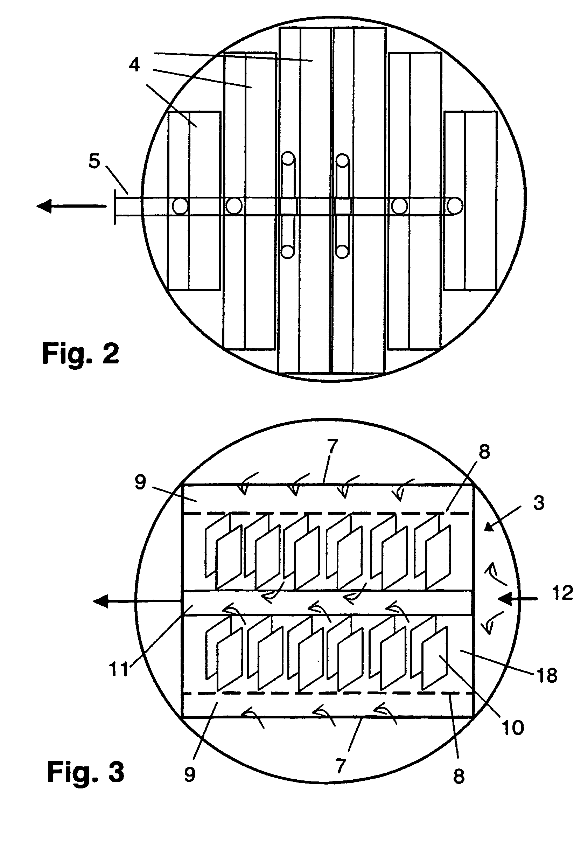

Fig. 2 zeigt die Anordnung der Gasabscheiderelemente 4 und des Gasabzugs, der in die Verbindungsleitung 5 übergeht, im Reaktorquerschnitt.

Fig. 3 zeigt eine Dreiphasentrennvorrichtung 3, wobei die Strömungsrichtung wieder durch Pfeile dargestellt ist. Das Dreiphasengemisch gelangt über die Einströmkanten 7 jeweils in den Raum 9 zur Strömungsberuhigung und durch die Wände 8 in den Sedimentationsraum 18. Als eine der bevorzugten Separationseinrichtungen ist ein Lamellenseparator 10 mit der Ablaufrinne 11 dargestellt, über welche der Klarwasserabzug erfolgt. In dieser Fig. ist auch angegeben, wo der Schlamm aus der Schlammleitung 12 neben der Dreiphasentrennvorrichtung 3 in den Reaktor geführt wird.

## Patentansprüche

1. Reaktor zur anaeroben Behandlung von Flüssigkeiten, insbesondere von Abwasser oder wässrigen Prozesslösungen, durch anaerobe biologische Umsetzung organischer Verunreinigungen mittels granulierter, flockiger oder auf leicht fluidisierbaren Trägermaterialien fixierter Biomasse, umfassend eine Dreiphasen-Trennvorrichtung (3) zur Trennung von Gas, Flüssigkeit und Feststoff, mit einem Sedimentationsbehälter (21), der mindestens eine Einströmkante (7) für ein Dreiphasengemisch aufweist und der weiters eine Schlammleitung (12) für sedimentierte Feststoffe aufweist, mit welcher der Sedimentationsbehälter (21) an seiner Unterseite gegenüber dem Reaktorinnenraum abgeschlossen ist, umfassend weiters einen unterhalb der Dreiphasen-Trennvorrichtung (3) angeordneten Gasabscheider (4), **dadurch gekennzeichnet, dass** im Sedimentationsbehälter (21) zumindest eine Einrichtung (10) zur Unterstützung der Feststoffseparation angeordnet ist, die Lamellen aufweist, und dass die Schlammleitung (12) oberhalb des Austritts aus dem Sedimentationsbehälter (21) oberhalb der Wasseroberfläche in den Reaktorinnenraum mündet, wobei eine Mammutpumpe (13) zur Förderung des sedimentierten Schlammes in den Reaktorkopf mittels des im Gasabscheider (4) abgeschiedenen Gases vorgesehen ist.

2. Reaktor nach Anspruch 1, **dadurch gekennzeichnet, dass** im Sedimentationsbehälter (21) durch eine für ein Dreiphasengemisch durchlässige Abgrenzung (8) zumindest ein Raum zur Strömungsberuhigung (9) und zumindest ein Sedimentationsraum (18) gebildet wird.

3. Reaktor nach Anspruch 2, **dadurch gekennzeichnet, dass** im Sedimentationsraum (18) eine Einrichtung (10) zur Unterstützung der Feststoffseparation vorgesehen ist, die Lamellen aufweist.

4. Reaktor nach einem der Ansprüche 1 bis 3, **dadurch gekennzeichnet, dass** im Sedimentationsbehälter (21), insbesondere im Sedimentationsraum (18) nach Anspruch 2, eine Einrichtung (11) zum Ableiten der gereinigten Flüssigkeit angeordnet ist.

5. Reaktor nach einem der Ansprüche 2 bis 4, **dadurch gekennzeichnet, dass** die durchlässige Abgrenzung (8) eine Wand mit Öffnungen ist.

6. Reaktor nach einem der Ansprüche 1 bis 5, **dadurch gekennzeichnet, dass** sich der Querschnitt des Sedimentationsbehälters (21) von der Unterseite zur Einströmkante (7) hin erweitert.

7. Reaktor nach einem der Ansprüche 1 bis 6, **dadurch gekennzeichnet, dass** zumindest eine Verbindungsleitung (5) zum Ableiten des Gases aus dem Gasabscheider (4) vorgesehen ist, welche zur Erzielung eines Mammutpumpeneffektes in die Schlammleitung (12) mündet.

8. Reaktor nach Anspruch 7, **dadurch gekennzeichnet, dass** vor der Mündung der Verbindungsleitung (5) in die Schlammleitung (12) eine weitere Gasleitung (20) mündet, durch welche mittels einer Pumpe (15) Gas, insbesondere aus einem Gassammelraum im Kopf des Reaktors, in die Schlammleitung (12) gefördert werden kann.

9. Reaktor nach einem der Ansprüche 1 bis 8, **dadurch gekennzeichnet, dass** die Dreiphasen-Trennvorrichtung (3) mit einem Abstand zur Reaktorwand angeordnet wird, sodass sich an der Unterseite der Dreiphasen-Trennvorrichtung (3) eine Aufwärtsströmung des Dreiphasengemisches ausbildet, während sich an der Reaktorwand eine Abwärtsströmung ausbilden kann.

10. Verfahren zur Trennung eines Dreiphasengemisches bei der anaeroben Behandlung von Flüssigkeiten, inbesondere von Abwasser oder wässrigen Prozesslösungen, durch anaerobe biologische Umsetzung organischer Verunreinigungen mittels granulierter, flockiger oder auf leicht fluidisierbaren Trägermaterialien fixierter Biomasse, **dadurch gekennzeichnet, dass** nach dem Abscheiden eines Teiles des Gases, das in einem Schlammbett (2) gebildet wird, eine Trennung der drei Phasen durch Umlenkung des Dreiphasengemisches und anschließender Abscheidung der Biomasse an Lamellen erfolgt, wobei die bei der Dreiphasen-Trennung (3) an Lamellen abgeschiedene Biomasse durch Gas (5), das aus der Gasabscheidung stammt, mittels Mammutpumpeneffekt angehoben und in das Dreiphasengemisch zurückgeführt wird, indem es von einer oberhalb der Wasseroberfläche in den Reaktorinnenraum mündenden Schlammleitung (12) in einen Bereich mit abwärts gerichteter Strömung und von dieser in das Schlammbett (2) eingebracht wird.

## Claims

1. Reactor for the anaerobic treatment of liquids, in particular of waste water or aqueous process solutions, by anaerobic biological conversion of organic impurities by means of granulated biomass, flocculent biomass or biomass which is fixed on readily fluidizable carrier material, comprising a three-phase separation apparatus (3) for separating gas, liquid and solid having a sedimentation vessel (21), which has at least one inflow edge (7) for a three-phase mixture and which furthermore has a sludge line (12) for sedimented solids, by means of which the sedimentation vessel (21) is closed off from the interior of the reactor at its underside, comprising further a gas separator (4) which is arranged beneath the three-phase separation apparatus (3), **characterized in that** at least one device (10) for assisting with solids separation, which includes lamellae, is arranged in the sedimentation vessel (21) and that the sludge line (12) opens out into the interior of the reactor above the water surface and above the outlet from the sedimentation vessel (21), whereas an airlift pump (13) is provided to convey the sedimented sludge into the top of the reactor by utilizing the biogas collected in the gas separator (4).

2. Reactor according to Claim 1, **characterized in that** at least one space for flow calming (9) and at least one sedimentation space (18) are formed in the sedimentation vessel (21) by a partition (8) which is pervious to a three-phase mixture.

3. Reactor according to Claim 2, **characterized in that** a device (10) for assisting with solids separation which includes lamellae is provided in the sedimentation space (18).

4. Reactor according to one of Claims 1 to 3, **characterized in that** a device (11) for diverting the purified liquid is arranged in the sedimentation vessel (21), in particular in the sedimentation space (18) according to Claim 2.

5. Reactor according to one of Claims 2 to 4, **characterized in that** the pervious partition (8) is a wall with openings.

6. Reactor according to one of Claims 1 to 5, **characterized in that** the cross section of the sedimentation vessel (21) widens out from the underside to the inflow edge (7).

7. Reactor according to one of Claims 1 to 6, **characterized in that** there is at least one connecting line (5) for diverting the gas out of the gas separator (4), which connecting line, in order to achieve an airlift pump effect, opens out into the sludge line (12).

8. Reactor according to Claim 7, **characterized in that** upstream of the opening of the connection line (5), a further gas line (20), through which gas, in particular from a gas collection space in the top of the reactor, can be passed into the sludge line (12) by means of a pump (15), opens out into the sludge line (12).

9. Reactor according to one of Claims 1 to 8, **characterized in that** the three-phase separation apparatus (3) is arranged in a distance to the reactor wall so that an upward flow of the three-phase mixture is formed at the underside of the three-phase separation apparatus (3), while a downward flow can form at the reactor wall.

10. Method for separating a three-phase mixture during the anaerobic treatment of liquids, in particular of waste water or aqueous process solutions, by anaerobic biological conversion of organic impurities by means of granulated biomass, flocculent biomass or biomass which is fixed on readily fluidizable carrier materials, **characterized in that** after a fraction of the gas, which is formed in a sludge bed (2), has been separated off, the three phases are separated by deflection of the three-phase mixture and subsequent separation of the biomass at lamellae, the biomass which is separated off during the three-phase separation (3) at lamellae being lifted up by gas (5) which originates from the gas separation by means of an airlift pump effect and being returned to the three-phase mixture by being introduced from a sludge line (12) which debouches into the interior of the reactor above the water surface into an area with downward flow, and from this flow, into the sludge bed (2).

## Revendications

1. Réacteur pour le traitement anaérobie de liquides, en particulier d'eaux usées ou de solutions aqueuses de processus, par conversion biologique anaérobie d'impuretés organiques, au moyen d'une biomasse granulée, floconneuse, ou fixée sur des matériaux support facilement fluidisables, comprenant un dispositif séparateur à trois phases (3) pour la séparation des gaz, des liquides et des solides, avec un récipient de sédimentation (21) qui présente au moins une arête d'entrée d'écoulement (7) pour un mélange à trois phases, et qui présente en outre pour des solides sédimentés une conduite à boue (12), à l'aide de laquelle le récipient de sédimentation (21) est isolé à sa face inférieure par rapport à l'espace intérieur de réacteur, comprenant en outre un séparateur à gaz (4) disposé au-dessous du dispositif séparateur à trois phases (3), **caractérisé en ce que**, dans le récipient de sédimentation (21), est disposé au moins un dispositif (10) pour favoriser la séparation des solides, dispositif présentant des lamelles, et **en ce que** la conduite à boue (12) débouche au-dessus de la sortie du récipient de sédimentation (21), au-dessus de la surface de l'eau, dans l'espace intérieur du réacteur, sachant qu'une pompe mammouth (13) est prévue pour transférer la boue sédimentée dans la tête de réacteur, à l'aide du gaz ayant été séparé dans le séparateur à gaz (4).

2. Réacteur selon la revendication 1, **caractérisé en ce que**, dans le récipient de sédimentation (21), au moyen d'une délimitation (8) perméable à un mélange de trois phases, sont formées au moins une chambre pour la tranquillisation de l'écoulement (9) et au moins une chambre de sédimentation (18).

3. Réacteur selon la revendication 2, **caractérisé en ce que** dans la chambre de sédimentation (18), est prévu un dispositif (10) devant favoriser la séparation des solides, dispositif présentant des lamelles.

4. Réacteur selon l'une des revendications 1 à 3, **caractérisé en ce que**, dans le réservoir de sédimentation (21), en particulier dans la chambre de sédimentation (18) selon la revendication 2, est disposé un dispositif (12) servant à l'évacuation du liquide épuré.

5. Réacteur selon l'une des revendications 1 à 4, **caractérisé en ce que** la délimitation perméable (8) est une paroi garnie d'ouvertures.

6. Réacteur selon l'une des revendications 1 à 5, **caractérisé en ce que** la section transversale du récipient de sédimentation (21) va en s'élargissant en allant de la face inférieure vers l'arête d'entrée d'écoulement (7).

7. Réacteur selon l'une des revendications 1 à 6, **caractérisé en ce qu'**au moins une conduite de liaison (5) est prévue, pour l'évacuation du gaz hors du séparateur à gaz (4), et débouche dans la conduite à boue (12) pour obtenir un effet de pompe mammouth.

8. Réacteur selon la revendication 7, **caractérisé en ce que**, avant l'embouchure de la conduite de liaison (5) dans la conduite à boue (12), débouche une autre conduite à gaz (20) au moyen de laquelle, à l'aide d'une pompe (15), du gaz, en particulier issu d'une chambre de collecte de gaz située dans la tête du réacteur, peut être transféré dans la conduite à boue (12).

9. Réacteur selon l'une des revendications 1 à 8, **caractérisé en ce que** le dispositif séparateur à trois phases (3) est disposé à distance de la paroi de réacteur, de manière que, en face inférieure du dispositif séparateur à trois phases (3), soit formé un écoulement ascendant du mélange à trois phases, tandis qu'un écoulement descendant peut se former sur la paroi de réacteur.

10. Procédé de séparation d'un mélange à trois phases lors du traitement anaérobie de liquides, en particulier d'eaux usées ou de solutions aqueuses de processus, par conversion biologique anaérobie d'impuretés organiques, au moyen d'une biomasse granulée, floconneuse ou fixée sur des matériaux support aisément fluidisables, **caractérisé en ce que**, après la séparation d'une partie du gaz, formé dans un lit de boue (2), une séparation des trois phases est effectuée par déviation du mélange à trois phases et séparation subséquente de la biomasse sur des lamelles, la biomasse, déposée sur des lamelles lors de la séparation des trois phases (3), étant soulevée, par un effet de pompe mammouth, par du gaz (5) provenant de la séparation de gaz et retournée dans le mélange à trois phases, introduit, par une conduite à boue (12), débouchant au-dessus de la surface de l'eau dans la chambre intérieure du réacteur, dans une zone à écoulement dirigé vers le bas et, par celui-ci, dans le lit de boue (2).
